# EUROPÄISCHE PATENTSCHRIFT

(11) **EP 2 888 694 B1**
(45) Veröffentlichungstag und Bekanntmachung des Hinweises auf die Patenterteilung: **09.06.2021**
(21) Anmeldenummer: 13759123.6
(22) Anmeldetag: 20.08.2013
(51) Int. Cl.: G06F 21/62

(54) **COMPUTERIMPLEMENTIERTES SYSTEM UND VERFAHREN ZUM VERWALTEN VON AKTEN IN EINER TECHNISCHEN ANLAGE**
COMPUTER-IMPLEMENTED SYSTEM, AND METHOD FOR MANAGING FILES IN A TECHNICAL INSTALLATION
SYSTÈME MIS EN OEUVRE SUR ORDINATEUR ET PROCÉDÉ DE GESTION DE DOSSIERS DANS UNE INSTALLATION TECHNIQUE

(30) Priorität: 26.08.2012 DE 102012016703
(43) Veröffentlichungstag der Anmeldung: 01.07.2015
(73) Patentinhaber: Rothkopf, Ferdinand, 84494 Neumarkt-St. Veit (DE)
(72) Erfinder: Rothkopf, Ferdinand, 84494 Neumarkt-St. Veit (DE)
(74) Vertreter: Rothkopf, Ferdinand
(86) Internationale Anmeldenummer: PCT/DE2013/100299
(87) Internationale Veröffentlichungsnummer: WO 2014/032653

(56) Entgegenhaltungen:
- WO-A1-2011/150027
- US-A1- 2010 076 946

## Beschreibung

Die Erfindung betrifft ein computerimplementiertes System zum Verwalten von in einem Aktenverwaltungssystem einer technischen Anlage zu Akten abgelegten Dokumenten mit Hilfe von im Aktenverwaltungssystem hinterlegten Rechten für einen Zugriff von Benutzern des Aktenverwaltungssystems auf die Dokumente. Ferner betrifft die Erfindung ein System zum Ausführen eines solchen computerimplementierten Verfahrens. Ein derartiges System ist etwa aus WO 2011 150027 A1 bekannt.

Die Verarbeitung und Verwaltung von Dokumenten stellt heutzutage in vielen technischen Bereichen eine Herausforderung dar. Es müssen nicht nur große Mengen an Dokumenten verarbeitet und für Benutzer der zugehörigen technischen Systeme zugänglich gemacht werden, sondern es muss auch das Einrichten und Verwalten dieses Zugriffs auf die Dokumente für die Benutzer leicht beherrschbar sein.

Im Hinblick auf eine leicht beherrschbare Zugriffsmöglichkeit auf die Dokumente ist insbesondere das Aufnehmen bzw. Ablegen neuer Dokumente in das Aktenverwaltungssystem problematisch, weil dabei grundsätzlich jedem Dokument die Rechte für einen späteren Zugriff von Benutzern auf dieses Dokument zugewiesen werden müssen. Es gibt dazu den Lösungsansatz die aufzunehmenden Dokumente in unterschiedliche Dokumententypen zu ordnen, denen im Vorfeld bereits Rechte für einen Zugriff von Benutzern auf Dokumente dieses Dokumententyps zugewiesen wurden. Dem aufzunehmenden Dokument werden dann dieser Dokumententyp und damit die entsprechenden Rechte zugewiesen. Dieser Lösungsansatz ist aber insbesondere dann weiterhin problematisch, wenn es eine große Vielzahl bestehender und vielleicht sogar ständig neu hinzukommende Dokumententypen gibt.

Bei dem erfindungsgemäßen computerimplementierten Verfahren und System ist es als erfindungsgemäße Lösung vorgesehen, zum Verwalten von in einem Aktenverwaltungssystem zu Akten abgelegten Dokumenten mit Hilfe von im Aktenverwaltungssystem hinterlegten Rechten für einen Zugriff von Benutzern des Aktenverwaltungssystems auf die Dokumente, den Akten Metadaten zuzuordnen, die in dem Aktenverwaltungssystem in einem Dokument bzw. einer Dokumentendatei eingetragen werden, das dann mit einer Dokumentenanzeige angezeigt wird.

Die derartige Anzeige von Metadaten erfolgt nicht in einer klassischen Bildschirmmaske, sondern mit einem separaten Dienst bzw. Programm in einem Dokument bzw. einer Dokumentendatei. Das Dokument hat dabei ein Format, wie es auch die anderen Dokumente im Aktenverwaltungsprogramm haben, insbesondere ein PDF-Format. Das derart angezeigte Dokument und dessen Metadaten kommen insbesondere genauso zur Anzeige, wie sie auch ausgedruckt als Papier vorliegen würden. Das Dokument kann sofort ausgedruckt und auch wie alle anderen Dokumente des Aktenverwaltungssystems bearbeitet werden. Insbesondere kann es freigegeben werden, einem anderen Benutzer zur Kenntnis gebracht werden oder zur Dokumentation in einem Beteiligtenregister dauerhaft abgelegt werden. Ferner kann für solche Dokumente vorteilhaft in den Akten, Aktenfamilien und/oder Familienportfolios ein spezielles Metadatenregister vorgesehen werden. Die derartigen Dokumente zur Anzeige und Weiterbearbeitung von Metadaten können mit einer Vorlage erstellt werden, in der die Metadaten als Felder hinterlegt sind. Diese Vorlage kann vom einzelnen Benutzer, wie sämtliche anderen Vorlagen für die Dokumentenbeantwortung auch, individuell angepasst werden. Damit ist eine einfache Anpassung der Bildschirmansichten von Metadaten auch individuell für die einzelnen Benutzer möglich. Dabei kann der Benutzer auch bestimmen, welche Metadaten überhaupt angezeigt werden. Der Benutzer sieht die Metadaten genauso, wie sie ausgedruckt vorliegen. Insbesondere können die Metadaten genauso angezeigt werden, wie es auf Papier in einer früheren Aktenverwaltung üblich war.

Das einzelne, die Metadaten anzeigende Dokument ist insbesondere in der Dokumentenanzeige editierbar. Mit dem Editieren können die Benutzer vorteilhaft das ja die Metadaten zu einem bestimmten Zeitpunkt dokumentierende Dokument farblich markieren, sie können Anmerkungen machen, sie können das Dokument stempeln und/oder sie können es signieren. Ein Editieren von Feldern in einem Dokument kann ferner vorteilhaft auch zu einer Anpassung bzw. Änderung der Metadaten im System führen. Dabei wird vorzugsweise eine neue Metadaten-Dokumentendatei erzeugt, die wieder als Dokument in der zugehörigen Akte abgelegt wird. Zugleich können die Metadaten ins System zurückgeschrieben und damit entsprechend angepasst bzw. geändert werden.

Bei einer vorteilhaften Weiterbildung werden insbesondere die Dokumente innerhalb der Akten in mindestens zwei Beteiligtenregistern abgelegt und den Beteiligtenregistern werden Metadaten zugeordnet, die ebenfalls als ein Dokument angezeigt werden. So kann innerhalb eines Beteiligtenregisters auf einfache Weise der jeweilige Stand der Metadaten dokumentiert werden. Das einzelne Beteiligtenregister trägt auch die Rechte für den Zugriff der Benutzer, so dass auch die zugehörigen Metadaten nur für diesen Benutzer zugänglich sind.

Dieses Vorgehen ist auch für Ebenen von Aktenfamilien und Familienportfolios sehr vorteilhaft. Dabei werden vorzugsweise mindestens zwei Akten zu einer Aktenfamilie zusammengefasst und der Aktenfamilie werden Metadaten zugeordnet, die ebenfalls als ein Dokument angezeigt werden. Ferner wird der Aktenfamilie vorzugsweise mindestens ein Beteiligtenregister mit zugehörigen Metadaten direkt zugeordnet und diese Metadaten werden ebenfalls als ein Dokument angezeigt.

Alternativ oder zusätzlich werden zwei Aktenfamilien zu einem Familienportfolio zusammengefasst und dem Familienportfolio werden Metadaten zugeordnet, die ebenfalls als ein Dokument angezeigt werden. Dem Familienportfolio wird ferner insbesondere mindestens ein Beteiligtenregister mit zugehörigen Metadaten direkt zugeordnet und diese Metadaten werden ebenfalls als ein Dokument angezeigt.

Insbesondere werden die Dokumente innerhalb mindestens einer der Akten in mindestens zwei Beteiligtenregistern abgelegt und den einzelnen Beteiligtenregistern die Rechte für den Zugriff bestimmter Benutzer auf jeweils sämtliche in diesem Beteiligtenregister abgelegte Dokumente zugewiesen.

Bei dieser erfindungsgemäßen Weiterbildung sind die einzelnen Akten eines Aktenverwaltungssystems in Beteiligtenregister unterteilt. Die Dokumente bzw. Dokumentendatei, welche insbesondere als ein gescanntes Papierdokument oder als eine Druckdatei im PDF-Format oder TIF-Format vorliegen, werden beim Ablegen in die zugehörige Akte zumindest einem dieser Beteiligtenregister zugeordnet. Das Dokument wird also innerhalb der Akte in einem Beteiligtenregister abgelegt. Dabei umfasst der Begriff "Beteiligte" all jene Personen oder Institutionen, die an den im Aktenverwaltungssystem abzulegenden Dokumenten beteiligt sind. Die erfindungsgemäße Lösung berücksichtigt damit, dass die Dokumente nicht zum Selbstzweck in dem Aktenverwaltungssystem geführt werden, sondern dass sie immer von Personen oder Institutionen stammen oder für Personen oder Institutionen bestimmt sind, die an dem Inhalt der Dokumente beteiligt bzw. von diesem Inhalt betroffen sind.

Dem Beteiligtenregister sind vorteilhaft im System zum Ausführen dieses Verfahrens die Rechte für den Zugriff bestimmter Benutzer auf jeweils sämtliche in diesem Beteiligtenregister abgelegte Dokumente zugwiesen. Mit dem Ablegen in dem Beteiligtenregister wird damit auch dem Dokument das Recht für den Zugriff bestimmter Benutzer zugewiesen. Es ist keine gesonderte Zuweisung von Zugriffsrechten zu dem Dokument notwendig. Das Dokument muss nicht einmal einen besonderen Namen oder einen bestimmten Dokumententyp zugeordnet bekommen. Das Dokument muss nur in ein Beteiligtenregister verschoben werden und sofort sind die Zugriffsrechte auf dieses Dokument festgelegt. Das einzelne Beteiligtenregister hat zugewiesen, welche Benutzer auf die darin abgelegten Dokumente zugreifen dürfen.

Mit dieser vorteilhaften Lösung wird also eine geordnete Aktenverwaltung mit schnell zuordenbarer Rechtestruktur möglich. Zugleich ist diese Rechtestruktur für jeden Benutzer des Systems sehr leicht und intuitiv nachvollziehbar. Der einzelne Benutzer kann anhand der in einer Akte vorhandenen Beteiligtenregister sofort erkennen, welcher Benutzer auf die in den jeweiligen Beteiligtenregistern abgelegten Dokumente zugreifen kann. Dem Benutzer ist zugleich anhand der Beteiligtenregister einer Akte verdeutlicht, dass er mit der Ablage eines Dokuments in ein solches Beteiligtenregister zugleich anderen Benutzern einen Zugriff zu diesem Dokument ermöglicht. Insbesondere findet bei dieser Art der Zuweisung von Zugriffsrechten zu Dokumenten eines Aktenverwaltungssystems die Rechtezuweisung allein zu den Beteiligtenregistern und nicht zu den einzelnen Dokumenten selbst statt. Der Zugriff auf ein Beteiligtenregister umfasst zumindest ein Öffnen sämtlicher in dem Beteiligtenregister abgelegter Dokumente bzw. die Dokumentendateien.

Bei einer vorteilhaften Weiterbildung des erfindungsgemäßen computerimplementierten Verfahrens und des zugehörigen Systems sind die Benutzer in Rollen gruppiert und für mindestens eine der Rollen ist ein Beteiligtenregister mit entsprechend hinterlegten Rechten für den Zugriff von Benutzern dieser Rolle vorgesehen. So können beispielsweise für die Auftragsverwaltung die Rollen "Auftragsgeber" und "Auftragnehmer" als Rollen vorgesehen sein und diesen beiden Rollen ein Beteiligtenregister "Auftragsgeber-Auftragsnehmer" zugeordnet sein. In diesem Beteiligtenregister werden dann alle auftragsbezogenen Dokumente abgelegt, auf die jene Benutzer zugreifen können, die der jeweiligen Akte und ferner der Rolle "Auftraggeber" bzw. "Auftragnehmer" zugeordnet sind. Anhand der Rollen können ferner auch die Zugriffsrechte der Benutzer innerhalb der einzelnen Beteiligtenregister begrenzt sein, so dass z.B. definiert ein Ändern oder Löschen von Dokumenten innerhalb eines Beteiligtenregisters nur für bestimmte Rollen möglich ist.

Bei einer vorteilhaften Weiterbildung des oben genannten computerimplementierten Verfahrens sowie Systems werden die Dokumente, die zu bearbeiten sind, innerhalb mindestens einer der Akten in mindestens ein Bearbeitungsregister abgelegt und dem Bearbeitungsregister werden die Rechte für eine Bearbeitung dieser Dokumente von mindestens einem bestimmten Benutzer zugwiesen. Mit anderen Worten wird innerhalb der jeweiligen Akte mindestens einem Benutzer des Systems ein Bearbeitungsregister zugewiesen, aus dem heraus der Benutzer dann die Dokumente bearbeiten kann.

Ein Dokument wird immer dann einem Bearbeitungsregister zugewiesen, wenn es von einem Benutzer des Systems zu bearbeiten ist. Sobald ein Dokument einer Akte zugewiesen ist, werden das Bearbeitungsregister und vorzugsweise die weiteren, oben genannten Beteiligtenregister der Akte gleichzeitig angezeigt. Der Benutzer kann dann bei der Bearbeitung des Dokuments sofort auf den restlichen Akteninhalt zurückgreifen. Er kann auch das Dokument durch einfaches Verschieben in ein Beteiligtenregister einem weiteren Benutzer zur Verfügung stellen. Alternativ kann er das Dokument in ein nur für sich selbst zugängliches Beteiligtenregister ablegen.

Das ein Dokument von einem Benutzer zu bearbeiten ist, ist auch dann der Fall, wenn ein Dokument von außen in das System zu einem Benutzer gesendet worden ist. Somit kann mit einem Bearbeitungsregister vorteilhaft auch der Email-Eingang eines Benutzers aufgenommen werden, indem eine Umleitung der Emails in dieses Bearbeitungsregister eingerichtet ist. Aus dem Bearbeitungsregister kann der Benutzer die Dokumente dann einer Akte zuweisen.

Das mindestens eine Bearbeitungsregister ist vorzugsweise davon abhängig, ob das jeweilige Dokument mit einer bestimmten Aufgabe des Benutzers in Verbindung steht. Unter Aufgabe wird hierbei insbesondere eine bestimmte Tätigkeit mit zugehöriger Fristsetzung verstanden. Dabei werden insbesondere ein Bearbeitungsregister "Vorbereitung", ein Bearbeitungsregister "Aufgabenbearbeitung" und/oder ein Bearbeitungsregister "Nachbereitung" vorgesehen. Sofern noch keine Aufgabe zugewiesen ist, wird das Dokument in dem Bearbeitungsregister "Vorbereitung" abgelegt. Sobald eine Aufgabe zugewiesen wird, wird das Dokument vom System selbst in das Bearbeitungsregister "Aufgabenbearbeitung" übernommen. Wenn die Aufgabe erledigt und insbesondere vom Benutzer als erledigt gemeldet wird, wird das Dokument vom System in das Bearbeitungsregister "Nachbereitung" überführt. Ferner kann der Benutzer ein Dokument selbst in das nächste Bearbeitungsregister überführen und damit die Erledigung einer Aufgabe anzeigen. Dokumente im Bearbeitungsregister "Nachbereitung" können dann z.B. vom Benutzer selbst, oder einem anderen Benutzer, dem für dieses Register die Zugriffsrechte eingeräumt sind, endgültig in einem Beteiligtenregister abgelegt und/oder auch versendet werden. Ein Bearbeitungsregister "Aufgabenbearbeitung" enthält also alle Dokumente, denen eine zu erledigende Aufgabe zugewiesen ist. Ein Bearbeitungsregister "Vorbereitung" enthält alle Dokumente, denen noch keine Aufgabe zugewiesen worden ist. Ein Bearbeitungsregister "Nachbereitung" enthält schließlich alle Dokumente, denen eine gerade erledigte Aufgabe zugewiesen war. Dabei können für den einzelnen Benutzer als Sammelregister dargestellte Beteiligtenregister "Vorbereitung", "Aufgabenbearbeitung" und "Nachbereitung" zunächst alle Dokumente aufnehmen, die noch keiner Akte zugeordnet worden sind. Ferner können die Bearbeitungsregister "Vorbereitung", "Aufgabenbearbeitung" und "Nachbereitung" vorteilhaft zusammen mit den restlichen Beteiligtenregistern einer Akte dargestellt werden, sobald ein Dokument einer Akte zugeordnet worden ist. Somit ist in allen Bearbeitungsständen ein schneller Zugriff auf die restliche Akte gewährleistet.

Als Weiterbildung der derartigen Aufgabenverarbeitung ist ferner ein computerimplementiertes Verfahren vorgesehen, wobei mindestens einem Dokument mindestens eine Aufgabe zugewiesen wird und den Akten die Aufgaben als eine Sammlung der Aufgaben der zur Akte abgelegten Dokumente zugewiesen werden. Mit dieser Gestaltung werden an das einzelne Dokument der Akten die Aufgaben angehängt, die mit diesem Dokument in Verbindung stehen. So kann eine Aufgabe z.B. darin bestehen, dass ein bestimmter Benutzer ein Dokument bis zu einer bestimmten Frist beantworten muss. Für die Beantwortung kann an die Aufgabe bereits vorteilhaft die Vorlage für ein Anwortsdokument angehängt sein. Im Bearbeitungsregister "Aufgabenbearbeitung" wird dann das zu beantwortende Dokument und zugleich das zu verwendende Anwortsdokument dem Benutzer zur Verfügung gestellt. Zugleich hat der Benutzer Zugriff auf die restlichen Beteiligtenregister der Akte.

Dabei werden besonders bevorzugt mindestens zwei Akten zu einer Aktenfamilie zusammengefasst und der Aktenfamilie werden die Aufgaben als Sammlung der Aufgaben der zur Aktenfamilie zusammengefassten Akten zugewiesen. Bei dieser Weiterbildung wird insbesondere der Aktenfamilie mindestens ein Beteiligtenregister mit darin abgelegten Dokumenten direkt zugeordnet und der Aktenfamilie werden die Aufgaben auch als Sammlung der Aufgaben der in diesem Beteiligtenregister abgelegten Dokumente zugewiesen.

Ferner werden bevorzugt mindestens zwei Aktenfamilien zu einem Familienportfolio zusammengefasst und dem Familienportfolio werden die Aufgaben als Sammlung der Aufgaben der zu dem Familienportfolio zusammengefassten Aktenfamilien zugewiesen. Auch bei dieser Weiterbildung wird insbesondere dem Familienportfolio ferner mindestens ein Beteiligtenregister mit darin abgelegten Dokumenten direkt zugeordnet und dem Familienportfolio werden die Aufgaben auch als Sammlung der Aufgaben der in diesem Beteiligtenregister abgelegten Dokumente zugewiesen.

Mit dem derartigen Vorgehen können Aufgaben für die jeweiligen Benutzer gebündelt werden, wobei die Benutzer dann auf den Ebenen der Aktenfamilien und der Familienportfolios genauso arbeiten könne, wie auf der Ebene der Akten. Es müssen lediglich in der Struktur den Registern die Zugriffsrechte für die Benutzer zugewiesen und die Dokumente mit den daran angehängten Aufgaben in das jeweilige Registern abgelegt bzw. verschoben werden.

Vorzugsweise wird ferner mindestens ein Benutzer einer Gruppe zugewiesen und die Gruppe selbst wie ein Benutzer geführt, wobei insbesondere mindestens eine Gruppe einer Instanz zugewiesen wird und die Instanz selbst wie ein Benutzer geführt wird. Mit dieser Bündelung von Benutzern in Gruppen und Instanzen, die selbst wie ein Benutzer geführt werden, können Register für alle Benutzer einer Gruppe oder Instanz eingerichtet werden. So kann einer Gruppe als Abteilung innerhalb eines Unternehmens z.B. ein Bearbeitungsregister "Nachbereitung" eingerichtet sein, aus dem heraus dann einer der Benutzer die fertiggestellten Dokumente versendet, während alle anderen Benutzer sich über den Stand der Fertigstellung informieren können. Solche vereinfachten Rechtestrukturen eignen sich insbesondere für kleine Gruppen und Instanzen, in denen sich die Benutzer gegenseitig kennen und die Bearbeitung basierend auf gegenseitigem Vertrauen und ohne besondere Rechtesteuerung vorgenommen werden kann.

Gemäß einer Weiterbildung dieser Lösungen werden bei einem Computerimplementiertes Verfahren zum Verwalten von in einem Aktenverwaltungssystem zu Akten abgelegten Dokumenten mit Hilfe von im Aktenverwaltungssystem hinterlegten Rechten für einen Zugriff von Benutzern des Aktenverwaltungssystems auf die Dokumente, die Dokumente innerhalb der Akten in mindestens zwei Beteiligtenregistern abgelegt und wahlweise die Dokumente nur eines Beteiligtenregisters oder die Dokumente mehrerer Beteiligtenregistern gesammelt in ihrer zeitlichen Abfolge mit einer Dokumentenanzeige darstellbar. Die derartige Anzeige von Dokumenten ermöglicht ein Blättern von einem Dokument zum nächsten Dokument innerhalb eines Registers und wahlweise auch über mehrere Register hinweg. Ferner wird erfindungsgemäß eine Anzeige von Dokumenten über mehrere Register hinweg auf einem Zeitstrahl bevorzugt. Mit dieser Anzeige kann die Abfolge des Zugangs und des Versands von Dokumenten über die Register hinweg gut erkannt werden.

Die erfindungsgemäße Lösung ist ansonsten, wie bereits teilweise erwähnt, auf ein System zum Ausführen eines solchen computerimplementierten Verfahrens gerichtet. Dabei ist insbesondere das System zum Verwalten von in einem Aktenverwaltungssystem zu Akten abgelegten Dokumenten mit Hilfe von im Aktenverwaltungssystem hinterlegten Rechten für einen Zugriff von Benutzern des Aktenverwaltungssystems auf die Dokumente eingerichtet und weist ein Modul mit mindestens einer Akte auf, in der mindestens zwei Beteiligtenregister eingerichtet sind, in die die Dokumente innerhalb der Akten abgelegt werden. Dabei sind den einzelnen Beteiligtenregistern die Rechte für den Zugriff bestimmter Benutzer auf jeweils sämtliche in diesem Beteiligtenregister abgelegte Dokumente zugewiesen.

Ferner sind vorteilhaft mit einem Modul die Benutzer in Rollen gruppiert und für mindestens eine der Rollen ist ein Beteiligtenregister mit entsprechend hinterlegten Rechten für den Zugriff von Benutzern dieser Rolle vorgesehen.

Lösungsgemäß ist ferner ein Modul vorgesehen, mit dem die Dokumente, die zu bearbeiten sind, innerhalb mindestens einer der Akten in mindestens ein Bearbeitungsregister abgelegt sind. Dabei sind mit dem Modul dem Bearbeitungsregister die Rechte für eine Bearbeitung dieser Dokumente von mindestens einem bestimmten Benutzer zugewiesen.

Gemäß der erfindungsgemäßen Lösung ist ferner in einem zugehörigen Modul den Dokumenten je mindestens eine Aufgabe zuzuweisen und den Akten sind die Aufgaben als eine Sammlung der Aufgaben der zur Akte abgelegten Dokumente zugewiesen. Dabei sind insbesondere mindestens zwei Akten zu einer Aktenfamilie zusammengefasst und der Aktenfamilie sind die Aufgaben als Sammlung der Aufgaben der zur Aktenfamilie zusammengefassten Akten zugewiesen. Insbesondere ist der Aktenfamilie mindestens ein Beteiligtenregister mit darin abgelegten Dokumenten direkt zugeordnet und der Aktenfamilie sind die Aufgaben auch als Sammlung der Aufgaben der in diesem Beteiligtenregister abgelegten Dokumente zugewiesen. Insbesondere sind ferner mindestens zwei Aktenfamilien zu einem Familienportfolio zusammengefasst und dem Familienportfolio sind die Aufgaben als Sammlung der Aufgaben der zu dem Familienportfolio zusammengefassten Aktenfamilien zugewiesen. Ferner ist dem Familienportfolio in dem Modul vorteilhaft mindestens ein Beteiligtenregister mit darin abgelegten Dokumenten direkt zugeordnet und dem Familienportfolio sind die Aufgaben auch als Sammlung der Aufgaben der in diesem Beteiligtenregister abgelegten Dokumente zugewiesen.

In dem erfindungsgemäßen System ist vorteilhaft ein Modul vorgesehen, mit dem mindestens ein Benutzer einer Gruppe zugewiesen ist. Die Gruppe selbst ist dann im System wie ein Benutzer geführt, wobei insbesondere mindestens eine Gruppe einer Instanz zugewiesen ist und die Instanz selbst ebenfalls wie ein Benutzer geführt ist.

Lösungsgemäß ist ferner in dem System ein Modul zum Zuordnen von Metadaten zu der einzelnen Akte vorgesehen, wobei die Metadaten in dem Aktenverwaltungssystem in einem Dokument eingetragen sind, das mit einer Dokumentenanzeige angezeigt ist. Dabei ist insbesondere dieses Dokument in einem zugehörigen Modul zum Anzeigen der Dokumente editierbar. Ferner sind insbesondere die Dokumente innerhalb der Akten in mindestens zwei Beteiligtenregistern abgelegt und den Beteiligtenregistern sind Metadaten zugeordnet, die ebenfalls als ein Dokument angezeigt sind. Darüber hinaus sind insbesondere mindestens zwei Akten zu einer Aktenfamilie zusammengefasst und der Aktenfamilie sind Metadaten zugeordnet, die ebenfalls als ein Dokument angezeigt sind. Insbesondere ist der Aktenfamilie ferner mindestens ein Beteiligtenregister mit zugehörigen Metadaten direkt zugeordnet und diese Metadaten sind ebenfalls als ein Dokument angezeigt. Dabei sind ferner insbesondere zwei Aktenfamilien zu einem Familienportfolio zusammengefasst und dem Familienportfolio sind Metadaten zugeordnet, die ebenfalls als ein Dokument angezeigt sind. Dem Familienportfolio ist insbesondere ferner mindestens ein Beteiligtenregister mit zugehörigen Metadaten direkt zugeordnet und diese Metadaten sind ebenfalls als ein Dokument angezeigt.

Erfindungsgemäß ist ferner ein Modul vorgesehen, mit dem die Dokumente innerhalb der Akten in mindestens zwei Beteiligtenregistern abgelegt sind und wahlweise die Dokumente nur eines Beteiligtenregisters oder die Dokumente mehrerer Beteiligtenregister gesammelt in ihrer zeitlichen Abfolge mit einer Dokumentenanzeige dargestellt sind.

Ferner ist die Erfindung auf ein Computerprogramm mit Instruktionen zum Implementieren eines solchen Verfahrens gerichtet. Dabei sind im Computerprogramm insbesondere Instruktion zum Ablegen der Dokumente innerhalb mindestens einer der Akten in mindestens zwei Beteiligtenregistern und zum Zuweisen zu den einzelnen Beteiligtenregistern von Rechten für den Zugriff bestimmter Benutzer auf jeweils sämtliche in diesem Beteiligtenregister abgelegte Dokumente.

Vorzugsweise sind Instruktionen vorgesehen, mit denen die Benutzer in Rollen gruppiert sind und für mindestens eine der Rollen ein Beteiligtenregister mit entsprechend hinterlegten Rechten für den Zugriff von Benutzern dieser Rolle vorgesehen ist.

Gemäß der erfindungsgemäßen Lösung sind Instruktionen zum Ablegen der Dokumente, die zu bearbeiten sind, innerhalb mindestens einer der Akten in mindestens ein Bearbeitungsregister vorgesehen und dem Bearbeitungsregister sind die Rechte für eine Bearbeitung dieser Dokumente von mindestens einem bestimmten Benutzer zugewiesen.

Lösungsgemäß sind ferner Instruktionen vorgesehen, mit denen den Dokumenten je mindestens eine Aufgabe zuzuweisen wird und den Akten die Aufgaben als eine Sammlung der Aufgaben der zur Akte abgelegten Dokumente zugewiesen werden, wobei insbesondere mindestens zwei Akten zu einer Aktenfamilie zusammengefasst werden und der Aktenfamilie die Aufgaben als Sammlung der Aufgaben der zur Aktenfamilie zusammengefassten Akten zugewiesen werden, und insbesondere der Aktenfamilie mindestens ein Beteiligtenregister mit darin abgelegten Dokumenten direkt zugeordnet wird und der Aktenfamilie die Aufgaben auch als Sammlung der Aufgaben der in diesem Beteiligtenregister abgelegten Dokumente zugewiesen werden, wobei insbesondere mindestens zwei Aktenfamilien zu einem Familienportfolio zusammengefasst werden und dem Familienportfolio die Aufgaben als Sammlung der Aufgaben der zu dem Familienportfolio zusammengefassten Aktenfamilien zugewiesen werden, und insbesondere dem Familienportfolio ferner mindestens ein Beteiligtenregister mit darin abgelegten Dokumenten direkt zugeordnet wird und dem Familienportfolio die Aufgaben auch als Sammlung der Aufgaben der in diesem Beteiligtenregister abgelegten Dokumente zugewiesen werden.

Gemäß der Erfindung ist ferner ein Computerprogramm mit Instruktionen vorgesehen, mit denen mindestens ein Benutzer einer Gruppe zugewiesen und die Gruppe selbst wie ein Benutzer geführt wird, wobei insbesondere mindestens eine Gruppe einer Instanz zugewiesen wird und die Instanz selbst wie ein Benutzer geführt wird.

Zudem ist gemäß der Erfindung ein Computerprogramm mit Instruktionen geschaffen, mit denen den Akten Metadaten zugeordnet sind, die in dem Aktenverwaltungssystem in einem Dokument eingetragen werden, das mit einer Dokumentenanzeige angezeigt wird, wobei insbesondere dieses Dokument in der Dokumentenanzeige editierbar ist, wobei ferner insbesondere die Dokumente innerhalb der Akten in mindestens zwei Beteiligtenregistern abgelegt werden und den Beteiligtenregistern Metadaten zugeordnet werden, die ebenfalls als ein Dokument angezeigt werden, wobei ferner insbesondere mindestens zwei Akten zu einer Aktenfamilie zusammengefasst werden und der Aktenfamilie Metadaten zugeordnet werden, die ebenfalls als ein Dokument angezeigt werden, und insbesondere der Aktenfamilie ferner mindestens ein Beteiligtenregister mit zugehörigen Metadaten direkt zugeordnet wird und diese Metadaten ebenfalls als ein Dokument angezeigt werden, wobei ferner insbesondere zwei Aktenfamilien zu einem Familienportfolio zusammengefasst werden und dem Familienportfolio Metadaten zugeordnet werden, die ebenfalls als ein Dokument angezeigt werden, und insbesondere dem Familienportfolio ferner mindestens ein Beteiligtenregister mit zugehörigen Metadaten direkt zugeordnet wird und diese Metadaten ebenfalls als ein Dokument angezeigt werden.

Ein erfindungsgemäßes Computerprogramm enthält ferner Instruktionen, mit denen die Dokumente innerhalb der Akten in mindestens zwei Beteiligtenregistern abgelegt werden und wahlweise die Dokumente nur eines Beteiligtenregisters oder die Dokumente mehrerer Beteiligtenregister gesammelt in ihrer zeitlichen Abfolge mit einer Dokumentenanzeige dargestellt werden.

## Patentansprüche

1. Computerimplementiertes Verfahren zum Verwalten von in einem Aktenverwaltungssystem zu Akten abgelegten Dokumenten mit Hilfe von im Aktenverwaltungssystem hinterlegten Rechten für einen Zugriff von Benutzern des Aktenverwaltungssystems auf die Dokumente, wobei den Akten Metadaten zugeordnet sind,
**dadurch gekennzeichnet, dass** die Metadaten der Akten in dem Aktenverwaltungssystem in einem Dokument eingetragen werden,
wobei dieses damit den jeweiligen Stand der Metadaten dokumentierende Dokument dabei ein PDF-Format hat,
wobei auch die anderen Dokumente im Aktenverwaltungssystem ein PDF-Format haben, und
wobei zur Anzeige der Metadaten dieses den jeweiligen Stand der Metadaten dokumentierende Dokument im PDF-Format mit einer Dokumentenanzeige angezeigt wird, mit der es wie alle anderen Dokumente des Aktenverwaltungssystems bearbeitet werden kann.

2. Computerimplementiertes Verfahren nach Anspruch 1,
wobei dieses Dokument in der Dokumentenanzeige editierbar ist.

3. Computerimplementiertes Verfahren nach Anspruch 1 oder 2,
wobei ferner die Dokumente innerhalb der Akten in mindestens zwei Beteiligtenregistern abgelegt werden und den Beteiligtenregistern Metadaten zugeordnet werden, die ebenfalls als ein Dokument angezeigt werden.

4. Computerimplementiertes Verfahren nach einem der Ansprüche 1 bis 3,
wobei ferner mindestens zwei Akten zu einer Aktenfamilie zusammengefasst werden und der Aktenfamilie Metadaten zugeordnet werden, die ebenfalls als ein Dokument angezeigt werden, und insbesondere der Aktenfamilie ferner mindestens ein Beteiligtenregister mit zugehörigen Metadaten direkt zugeordnet wird und diese Metadaten ebenfalls als ein Dokument angezeigt werden.

5. Computerimplementiertes Verfahren nach einem der Ansprüche 1 bis 4,
wobei ferner zwei Aktenfamilien zu einem Familienportfolio zusammengefasst werden und dem Familienportfolio Metadaten zugeordnet werden, die ebenfalls als ein Dokument angezeigt werden, und insbesondere dem Familienportfolio ferner mindestens ein Beteiligtenregister mit zugehörigen Metadaten direkt zugeordnet wird und diese Metadaten ebenfalls als ein Dokument angezeigt werden.

6. Computerimplementiertes Verfahren nach einem der Ansprüche 1 bis 5,
wobei die Dokumente innerhalb mindestens einer der Akten in mindestens zwei Beteiligtenregistern abgelegt werden und den einzelnen Beteiligtenregistern die Rechte für den Zugriff bestimmter Benutzer auf jeweils sämtliche in diesem Beteiligtenregister abgelegte Dokumente zugewiesen werden.

7. Computerimplementiertes Verfahren nach einem der Ansprüche 1 bis 6,
wobei die Dokumente, die zu bearbeiten sind, innerhalb mindestens einer der Akten in mindestens ein Bearbeitungsregister abgelegt werden und dem Bearbeitungsregister die Rechte für eine Bearbeitung dieser Dokumente von mindestens einem bestimmten Benutzer zugewiesen werden.

8. Computerimplementiertes Verfahren nach einem der Ansprüche 1 bis 7,
wobei den Dokumenten je mindestens eine Aufgabe zuzuweisen wird und den Akten die Aufgaben als eine Sammlung der Aufgaben der zur Akte abgelegten Dokumente zugewiesen werden,
wobei insbesondere mindestens zwei Akten zu einer Aktenfamilie zusammengefasst werden und der Aktenfamilie die Aufgaben als Sammlung der Aufgaben der zur Aktenfamilie zusammengefassten Akten zugewiesen werden, und insbesondere der Aktenfamilie mindestens ein Beteiligtenregister mit darin abgelegten Dokumenten direkt zugeordnet wird und der Aktenfamilie die Aufgaben auch als Sammlung der Aufgaben der in diesem Beteiligtenregister abgelegten Dokumente zugewiesen werden,
wobei insbesondere mindestens zwei Aktenfamilien zu einem Familienportfolio zusammengefasst werden und dem Familienportfolio die Aufgaben als Sammlung der Aufgaben der zu dem Familienportfolio zusammengefassten Aktenfamilien zugewiesen werden, und insbesondere dem Familienportfolio ferner mindestens ein Beteiligtenregister mit darin abgelegten Dokumenten direkt zugeordnet wird und dem Familienportfolio die Aufgaben auch als Sammlung der Aufgaben der in diesem Beteiligtenregister abgelegten Dokumente zugewiesen werden.

9. Computerimplementiertes Verfahren nach einem der Ansprüche 1 bis 8,
wobei die Dokumente innerhalb der Akten in mindestens zwei Beteiligtenregistern abgelegt werden und wahlweise die Dokumente nur eines Beteiligtenregisters oder die Dokumente mehrerer Beteiligtenregister gesammelt in ihrer zeitlichen Abfolge mit einer Dokumentenanzeige dargestellt werden.

10. System zum Ausführen eines computerimplementierten Verfahrens nach einem der Ansprüche 1 bis 9.

## Claims

1. Computer-implemented method for managing documents stored as files in a file management system with the aid of rights, defined in the file management system, for access to the documents by users of the file management system, wherein metadata are assigned to the files,
**characterized in that** the metadata of the files are listed in the file management system in a document,
wherein that document documenting the respective status of the metadata is in PDF format,
wherein the other documents in the file management system are also in PDF format, and
wherein, for displaying the metadata, this document documenting the respective status of the metadata in PDF format is displayed using a document viewer with which it can be processed like all the other documents of the file management system.

2. Computer-implemented method according to claim 1,
wherein this document is editable in the document viewer.

3. Computer-implemented method according to claim 1 or 2,
wherein the documents within the files are further stored in at least two participant registers and there are assigned to the participant registers metadata which are likewise displayed as a document.

4. Computer-implemented method according to any one of claims 1 to 3,
wherein at least two files are further grouped into a file family and there are assigned to the file family metadata which are likewise displayed as a document, and in particular there is further assigned directly to the file family at least one participant register with associated metadata, and those metadata are likewise displayed as a document.

5. Computer-implemented method according to any one of claims 1 to 4,
wherein two file families are further grouped into a family portfolio and there are assigned to the family portfolio metadata which are likewise displayed as a document, and in particular there is further assigned directly to the family portfolio at least one participant register with associated metadata, and those metadata are likewise displayed as a document.

6. Computer-implemented method according to any one of claims 1 to 5,
wherein the documents within at least one of the files are stored in at least two participant registers, and there are allocated to the individual participant registers the rights of access of specific users to in each case all the documents stored in that participant register.

7. Computer-implemented method according to any one of claims 1 to 6,
wherein the documents to be processed within at least one of the files are stored in at least one processing register, and the rights of processing of those documents by at least one specific user are allocated to the processing register.

8. Computer-implemented method according to any one of claims 1 to 7,
wherein at least one task is allocated to each of the documents and the tasks are allocated to the files as a collection of the tasks of the documents stored in the file, wherein in particular at least two files are grouped into a file family and the tasks are allocated to the file family as a collection of the tasks of the files grouped into the file family, and in particular there is assigned directly to the file family at least one participant register with documents stored therein and the tasks are also allocated to the file family as a collection of the tasks of the documents stored in that participant register,
wherein in particular at least two file families are grouped into a family portfolio and the tasks are allocated to the family portfolio as a collection of the tasks of the file families grouped into the family portfolio, and in particular there is further assigned directly to the family portfolio at least one participant register with documents stored therein and the tasks are also allocated to the family portfolio as a collection of the tasks of the documents stored in that participant register.

9. Computer-implemented method according to any one of claims 1 to 8,
wherein the documents within the files are stored in at least two participant registers and either the documents of only one participant register or the documents of a plurality of participant registers grouped in their chronological order are displayed using a document viewer.

10. System for carrying out a computer-implemented method according to any one of claims 1 to 9.

## Revendications

1. Procédé mis en œuvre sur ordinateur pour la gestion de documents rangés dans des dossiers dans un système de gestion de dossiers à l'aide de droits mémorisés dans le système de gestion de dossiers pour un accès aux documents par des utilisateurs du système de gestion de dossiers, des métadonnées étant associées aux dossiers ; **caractérisé en ce que** les métadonnées des dossiers sont consignées dans un document dans le système de gestion de dossiers, ledit document documentant l'état respectif des métadonnées étant en l'occurrence au format PDF ;
les autres documents contenus dans le système de gestion de dossiers étant également au format PDF ; et
ledit document documentant l'état respectif des métadonnées étant affiché au format PDF avec un affichage de document pour l'affichage des métadonnées, ledit affichage permettant son traitement comme tous les autres documents du système de gestion de dossiers.

2. Procédé mis en œuvre sur ordinateur selon la revendication 1, ledit document étant éditable dans l'affichage de document.

3. Procédé mis en œuvre sur ordinateur selon la revendication 1 ou 2, les documents étant en outre rangés à l'intérieur des dossiers dans au moins deux registres des intéressés et des métadonnées étant associées aux registres des intéressés, lesdites métadonnées étant également affichées sous la forme d'un document.

4. Procédé mis en œuvre sur ordinateur selon l'une quelconque des revendications 1 à 3, au moins deux dossiers étant en outre rassemblés en une famille de dossiers et des métadonnées étant associées à la famille de dossiers, ces métadonnées étant également affichées sous la forme d'un document et un registre des intéressés avec les métadonnées associées étant en outre notamment au moins directement associé à la famille de dossiers et ces métadonnées étant également affichées sous la forme d'un document.

5. Procédé mis en œuvre sur ordinateur selon l'une quelconque des revendications 1 à 4, deux familles de dossiers étant en outre rassemblées en un portefeuille familial et des métadonnées étant associées au portefeuille familial, lesdites métadonnées étant également affichées sous la forme d'un document et notamment en outre au moins un registre des intéressés étant directement associé au portefeuille familial avec des métadonnées associées et ces métadonnées étant également affichées sous la forme d'un document.

6. Procédé mis en œuvre sur ordinateur selon l'une quelconque des revendications 1 à 5, les documents étant rangés à l'intérieur d'au moins un des dossiers dans au moins deux registres des intéressés et les droits d'accès d'utilisateurs définis étant assignés aux registres des intéressés individuels sur respectivement l'ensemble des documents rangés dans ce registre des intéressés.

7. Procédé mis en œuvre sur ordinateur selon l'une quelconque des revendications 1 à 6, les documents à traiter qui sont rangés à l'intérieur d'au moins un des dossiers dans au moins un registre de traitement et les droits de traitement de ces documents sont assignés au registre de traitement par au moins un utilisateur défini.

8. Procédé mis en œuvre sur ordinateur selon l'une quelconque des revendications 1 à 7, au moins une tâche étant respectivement assignée aux documents et les tâches étant assignées aux dossiers sous la forme d'une compilation des tâches des documents rangés en dossiers ;
notamment au moins deux dossiers étant rassemblés en une famille de dossiers et les tâches étant assignées à la famille de dossiers sous la forme d'une compilation des tâches des dossiers rassemblés en famille de dossiers et au moins un registre des intéressés avec les documents rangés à l'intérieur étant notamment directement associé à la famille de dossiers et les tâches étant assignées à la famille de dossiers sous la forme d'une compilation des tâches des documents rangés dans ce registre des intéressés ;
notamment au moins deux familles de dossiers étant rassemblées en un portefeuille familial et les tâches étant assignées au portefeuille familial sous la forme d'une compilation des tâches des familles de dossiers rassemblées en un portefeuille familial et notamment en outre au moins un registre des intéressés avec les documents rangés à l'intérieur étant directement associé au portefeuille familial et les tâches étant également assignées au portefeuille familial sous la forme d'une compilation des tâches des documents rangés dans ce registre des intéressés.

9. Procédé mis en œuvre sur ordinateur selon l'une quelconque des revendications 1 à 8, les documents étant rangés à l'intérieur des dossiers dans au moins deux registres des intéressés et en option les documents de seulement un registre des intéressés ou les documents de plusieurs registres des intéressés étant représentés ensemble par ordre chronologique à l'aide d'un affichage de document.

10. Système de mise en œuvre d'un procédé mis en œuvre sur ordinateur selon l'une quelconque des revendications 1 à 9.
